# EUROPEAN PATENT SPECIFICATION

(11) **EP 3 172 967 B1**
(45) Date of publication and mention of the grant of the patent: **11.07.2018**
(21) Application number: 15196929.2
(22) Date of filing: 30.11.2015
(51) Int. Cl.: A21D 2/00, A21D 2/18, A21D 8/04, A21D 13/00, A21D 8/00

(54) **MULTICOLORED DONUT**
MEHRFARBIGER DOUGHNUT
BEIGNET MULTICOLORE

(43) Date of publication of application: 31.05.2017
(73) Proprietor: CSM Bakery Solutions Europe Holding B.V., 1019 GM Amsterdam (NL)
(72) Inventor: Moret, Pieter, 4421 ML, Kapelle (NL); O'Neill, Stephen John, Cheshire, 659 JS Ellesmereport (GB); Heuberger, Kai Alexander, 27574 Bremerhaven (DE)
(74) Representative: Nederlandsch Octrooibureau

(56) References cited:
- WO-A1-2014/181826
- CA-A1- 2 275 428
- DATABASE WPI Week 199919 Thomson Scientific, London, GB; AN 1999-222251 XP002753395, & JP H11 56215 A (ASAHI KASEI KOGYO KK) 2 March 1999 (1999-03-02)
- DATABASE WPI Week 199417 Thomson Scientific, London, GB; AN 1994-140503 XP002753396, & JP H06 86626 A (FURUKAWA KOGYO KK) 29 March 1994 (1994-03-29)

## Description

### TECHNICAL FIELD OF THE INVENTION

The present invention provides a method for the manufacture of a multicolored donut. More particularly, the invention provides a method of the manufacture of a multicolored donut comprising the steps of:
- providing a first dough having a first color;
- providing a second dough having a second color, said second color being visibly different from the first color;
- combining a layer of the first dough with a layer of the second dough to produce a layered dough;
- folding the layered dough at least one time to prepare a multilayered dough;
- cutting dough pieces from the multilayered dough;
- cooking the dough pieces, said cooking comprising contacting the dough pieces with hot oil having a temperature in excess of 150°C for at least 3 seconds.

The invention also relates to the multicolored donuts that can be obtained by the aforementioned method. These donuts have a very attractive striped color pattern.

### BACKGROUND OF THE INVENTION

There are two main types of donut, i.e. cake donuts and yeast donuts. Cake donuts are usually made from a batter that has been leavened with baking powder and are formed by means of extrusion. Yeast donuts are made from yeast fermented dough and tend to be fluffier and lighter than cake donuts. Yeast donuts may be formed by extrusion through a die or from sheets of dough that are stamped by a cutter. Both cake donuts and yeast donuts are usually cooked by frying in oil.

Donuts are a typical indulgence treat. The cooked dough that forms the basis of a donut is not particularly appealing to the eye. This is why icing glazes are often applied on top of donuts to render them more attractive and create distinction. However, icing glazes have a high caloric content and are easily damaged. JP H11 56215 A discloses doughnuts including a multilayer structure with predetermined layer thickness separated by clearance layers.

JP H06 86626 A discloses multicoloured ring doughnuts. CA2275428 describes a method of making a doughnut comprising two or more types of dough of different flavors and/or colors, wherein the doughs are dispensed through a dispensing hole of a dough hopper having a dough container, and dough dispensing pistons, the method comprising substantially preventing the two or more doughs from commingling in the dough container prior to dispensing; and dispensing the two or more doughs from the dough hopper.
WO 2014/181826 describes the preparation of doughnuts from dough having a multilayer structure comprising layers of doughy dough and layers of pastry dough.
US 2015/0250191 describes a method of preparing a ready-to-eat farinaceous food product, said method comprising the successive steps of:
- contacting 30-70% of the total surface area of one or more dough portions with hot oil during a period of at least 10 seconds to produce one or more partially fried dough pieces;
- baking the one or more partially fried dough pieces to produce one or more baked dough pieces;
- applying a layer of edible material to 40-70% of the surface area of the baked, partially fried dough pieces, such that at least 70% of the surface under the layer of edible material is non-fried, and wherein the part of the total surface of the baked, fried dough pieces that is without a layer of edible material, is fried.
The example of this US patent application describes the preparation of ring donuts from yeast-containing dough. After 10 minutes of resting at room temperature this dough was laminated and rings were cut.

### SUMMARY OF THE INVENTION

The inventors have developed a method of manufacturing donuts that is easy to operate and that yields donuts with a very appealing striped color pattern. This method comprises the steps of:
- providing a first dough having a first color;
- providing a second dough having a second color, said second color being visibly different from the first color;
- combining a layer of the first dough with a layer of the second dough to produce a layered dough;
- folding the layered dough at least one time to prepare a multilayered dough;
- cutting dough pieces from the multilayered dough;
- cooking the dough pieces, said cooking comprising contacting the dough pieces with hot oil having a temperature in excess of 150°C for at least 3 seconds.

The donuts obtained by this method exhibit a unique striped color pattern that is visible both on the surface of the donut and inside the donut. Because of this appealing color pattern, there is no need for applying an icing glaze to render the donuts more attractive.

Naturally, the appeal of the donuts may be further enhanced by employing differently flavored doughs in the different dough layers. The present method can suitably be used to prepare donuts with complex striped color patterns that include 3 or more different colors.

The invention also pertains to donuts that can be obtained by the aforementioned method.

### DRAWINGS

Figure 1 shows a multilayered dough with striped color pattern.
Figure 2 shows a ring shaped dough piece that has been cut from the multilayered dough of Figure 1 and that was subsequently proofed.
Figure 3 shows a ready-to-eat donut that was prepared by frying the proofed ring shaped dough piece of Figure 2.

### DETAILED DESCRIPTION OF THE INVENTION

A first aspect of the present invention relates to a method of preparing a donut, said method comprising the steps of:
- providing a first dough having a first color;
- providing a second dough having a second color, said second color being visibly different from the first color;
- combining a layer of the first dough with a layer of the second dough to produce a layered dough;
- folding the layered dough at least one time to prepare a multilayered dough;
- cutting dough pieces from the multilayered dough;
- cooking the dough pieces, said cooking comprising contacting the dough pieces with hot oil having a temperature in excess of 150°C for at least 3 seconds.

Besides the first dough and the second dough the present method may suitably employ one or more additional dough components having colors different from the first dough and second dough. Preferably, the present method employs 2 to 6 differently colored dough components, including the first dough and the second dough. More preferably, the present method employs 2 to 4 differently colored dough components.

The difference in color between the first dough and the second dough can be achieved by using a color imparting ingredient in at least one of the doughs. Examples of color imparting ingredients include cocoa powder, caramel, fruit extracts, colorings and combinations thereof.

In another preferred embodiment not only the color, but also the taste of the second dough is distinguishably different from the taste of the first dough. Differences in taste can be realized by using different taste contributing components in the first dough and second dough. Examples of taste contributing components that can be used include cocoa, vanilla extract, fruit juice, fruit prep, flavoring and combinations thereof

Both the first dough and the second dough that are employed in the present method have the following composition:
- 100 bakers% flour;
- 20-70 bakers%, preferably 40-60 bakers% water;
- 1-20 bakers%, preferably 2-10 bakers% oil;
- 0.5-15 bakers%, preferably 2-10 bakers% sugar;
- 0.5-15 bakers% preferably 2-10 bakers% of leavening agent.

The leavening agent is preferably selected from yeast, chemical leavening agent (e.g. baking soda) and combinations thereof. Most preferably, both the first dough and the second dough contain at least 0.5 bakers% of yeast.

The layer of the first dough and the layer of the second dough may be produced by rolling out a piece of dough. However, it is also possible to extrude the first dough and/or the second dough through a slit opening onto a receiving surface to produce a dough layer. According to a particularly preferred embodiment, the layer of the first dough and the layer of the second dough are produced by co-extrusion, i.e. by simultaneous extrusion of these layers.

An important element of the present method is the folding of the layered dough. The number of folding steps employed in the method determines the number of dough layers in the final donut. Preferably, the layered dough is folded 2 to 16 times before the cutting. More preferably, the layered dough is folded 3 to 6 times before the cutting.

Repeated folding of the layered dough can yield a multilayered dough that is quite thick. Accordingly, it is preferred to subject the multilayered dough to dough sheeting before the cutting. Here the term 'sheeting' refers to reducing the thickens of a dough layer, e.g. by passing the dough layer between two rotating rolls.

Lamination is a well-known technique that is used in bakeries to prepare laminated dough, i.e. a dough that is composed of thin layers of dough separated by layers of fat. These laminated doughs are used to prepare baked products having a light, flaky structure, such as croissants, Danish pastry and puff pastry. The present method, preferably does not yield a multilayered dough in which the dough layers are separated by fat layers. In other words, the multilayered dough preferably does not contain fat layers separating the dough layers.

The present method can suitably be used to prepare donuts of different shapes e.g. toroid-shaped, disk-shaped, block-shaped etc., depending on the form of the dough pieces that are cut from the multilayered dough. Preferably, the dough pieces that are cut from the multilayered dough are ring-shaped or disk-shaped. Most preferably, said dough pieces are ring shaped.

The dough pieces that are cut from the multilayered dough typically have a weight in the range of 10 to 100 grams, more preferably in the range of 20 to 60 grams. The height of the dough pieces immediately after the cutting is typically in the range of 0.3 to 3 cm, more preferably in the range of 0.5 to 2 cm.

After the cutting of the dough pieces from the multilayered dough there usually remain dough rests in the form of oddly shaped rests of the multilayered dough and trimmings. The inventors have found a way to utilize these dough rests as rework dough in the present process. The dough rests are combined and mixed to destroy the striped color pattern and the rework dough so obtained is introduced as a separate layer into the layered dough by combining the layer of rework dough with the layer of first dough and/or the layer of second dough. The mixing of the dough rests can be carried out in a suitable mixer.

In a particularly preferred embodiment of the present process, the rework dough is reintroduced in the process as the first dough or the second dough. According to a particularly preferred embodiment, coloring is added during the mixing of the dough rests so as to match the color of the rework dough to that of the first dough or the second dough. For instance, if the first dough is a cream colored dough and the second dough is a brown colored dough, the color of the rework dough can be matched to that of the brown colored second dough by adding brown coloring. The colored rework dough may then be used as the second dough.

In a particularly advantageous embodiment of the present process the first dough consists of rework dough. In accordance with this embodiment the second dough is freshly prepared and combined with the rework dough (first dough) to produce the layered dough.

Typically, the layer of rework dough represents 10 to 70 wt.%, more preferably 40-60 wt.% of the dough that is contained in the layered dough.

According to a preferred embodiment, the cut dough pieces are proofed before the cooking. Proofing of the cut dough pieces can suitably be done by keeping the dough pieces at a temperature in the range of 20 to 50 °C and a relative humidity of at least 30% for at least 15 minutes. More preferably, the dough pieces are proofed in a proofing cabinet at a temperature in excess of 25°Cand a relative humidity of at least 40%. The proofed dough pieces so obtained typically have a specific volume of at least 1.5 ml/g. More preferably, the proofed dough pieces have specific volume in the range of 2.0 to 4.0 ml/g.

The cooking of the dough pieces in the present method may yield a fully cooked donut that is ready-to-eat. Alternatively, the dough pieces may be partially cooked. The partially cooked donuts so obtained can suitably be prepared for consumption by subjecting them to an additional cooking step which may include, for instance, frying, oven baking or microwave heating. According to particularly preferred embodiment, the cooking of the dough pieces yields a fully cooked, ready-to-eat donut.

The cooking of the dough pieces in the present method comprises contacting the dough pieces with hot oil. The method may suitably employ a combination of cooking techniques, e.g. (par)frying and baking. Here the term "baking" refers to the cooking of dough pieces by dry heat, as opposed to e.g. boiling or frying. Besides conventional oven baking the term "baking" also encompasses the contacting of dough pieces with superheated steam and exposure of said dough pieces to hot air impingement or infrared radiation.

Another aspect of the invention relates to a multicolored donut that is obtainable or more particularly to a donut that is obtained by a preparation method as defined herein.

As explained herein before, the donut obtained by the present process exhibits a unique pattern of differently colored cooked dough layers. These differently colored layers of cooked dough typically have an average thickness in the range of 1-15 mm, more preferably of 2-8 mm.

The specific volume of the cooked donut typically lies within the range of 1.5 to 6.0 ml/g, more preferably of 2.0 to 4.0 ml/g.

According to a preferred embodiment, the donut is toroid-shaped or disk-shaped and has a radius of 1.0 to 8.0 cm, more preferably of 2.0 to 5.0 cm.

The height of the donut typically is in the range of 1.0 to 6.0 cm, more preferably of 2.0 to 4.0 cm.

The weight of the donut is preferably in the range of 20 to 70 grams, more preferably of 30 to 50 grams.

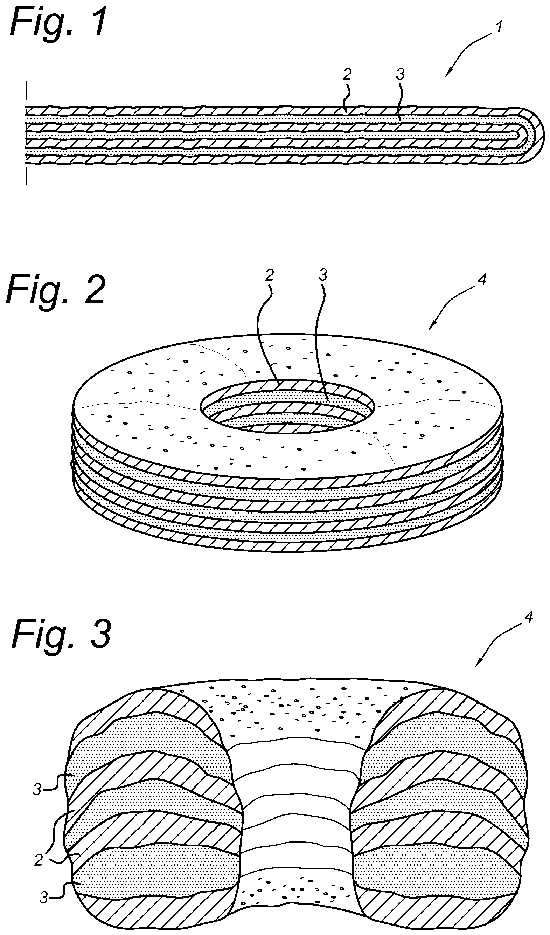

Figure 1 shows a multilayered dough **1** that was prepared from a light colored first dough **2** and a dark colored second dough **3.**

Figure 2 shows a proofed dough piece **4** that was obtained by cutting a ring-shaped dough piece from the multilayered dough of Figure 1 and by subsequently proofing the dough piece. The proofed dough piece **4** contains clearly discernable layers of the light colored first dough **2** and the dark colored second dough **3.**

Figure 3 shows a donut **4** that was prepared by frying the proofed dough piece of Figure 2. The donut **4** contains clearly discernable layers of light colored cooked first dough **2** and dark colored cooked second dough **3.**

The invention is further illustrated by the following non-limiting examples.

### EXAMPLES

### Example 1

A first, cream colored dough was prepared on the basis of the recipe shown in Table1.

**Table 1**

| | **Wt.%** |
|---|---|
| English blend flour | 56.1 |
| Donut premix | 11.8 |
| Natural vanilla flavour | 0.2 |
| Baker's yeast | 2.6 |
| Sunflower oil | 2.0 |
| Water | 27.3 |

A second, brown colored dough was prepared on the basis of the recipe shown in Table2.

**Table 2**

| | **Wt.%** |
|---|---|
| English blend flour | 55.0 |
| Donut premix | 11.6 |
| Natural vanilla flavour | 0.2 |
| Baker's yeast | 2.5 |
| Sunflower oil | 1.9 |
| Dark cocoa powder | 2.0 |
| Water | 26.8 |

The donut premix used in the two doughs contained sugars, emulsifiers, starch and baking powder.

Both the cream colored dough and the brown colored dough were sheeted to a thickness of approximately 1 cm. Both dough sheets had the same rectangular shape and size.

The brown colored dough was placed on top of the cream colored dough. Next, the two-layered dough was sheeted to a thickness of approximately 1 cm. The dough was folded into 1 bookfold to create a dough sheet with 3 layers of dough, i.e. 2 layers of cream colored dough separated by 1 layer of brown colored dough.

The dough was rested for 5 minutes. The dough sheet was again sheeted to approximately 1 cm and folded twice to create a dough with 9 layers.

The multilayered dough was sheeted to a thickness of approximately 1 cm. Dough rings with a weight of about 45 grams were cut out from the multilayered sheet.

The dough rings were proofed in a proofing cabinet at 38°C and a relative humidity of 60% for 45 minutes.

Next, the dough rings were fried in a standard frying pan for 60 seconds after which the donuts were turned and fried for another 60 seconds. The frying oil had a temperature of 180°C.

### Example 2

The dough rests of the multilayered dough that remained after the cutting of the dough rings in Example 1 were combined in a mixer / kneader with cocoa powder and a small quantity of water to produce a homogeneous brown colored rework dough having the composition described in Table 2 of Example 1.

Next, the procedure described in Example 1 was repeated using the rework dough instead of the brown colored dough. The donuts so obtained were indistinguishable from the donuts of Example 1.

## Claims

1. A method of preparing a multicolored donut, said method comprising the steps of:
• providing a first dough having a first color;
• providing a second dough having a second color, said second color being visibly different from the first color;
• combining a layer of the first dough with a layer of the second dough to produce a layered dough;
• folding the layered dough at least one time to prepare a multilayered dough;
• cutting dough pieces from the multilayered dough;
• cooking the dough pieces, said cooking comprising contacting the dough pieces with hot oil having a temperature in excess of 150°C for at least 3 seconds.

2. Method according to claim 1, wherein the method comprises cutting ring-shaped or disk-shaped dough pieces from the multilayered dough.

3. Method according to claim 1 or 2, wherein the layered dough is folded 2 to 16 times before the cutting.

4. Method according to any one of the preceding claims, wherein the multilayered dough is sheeted before the cutting.

5. Method according to any one of the preceding claims, wherein the first dough and the second dough have the following composition:
• 100 bakers% flour;
• 20-70 bakers% water;
• 1-20 bakers% oil;
• 0.5-15 bakers% sugar;
• 0.5-15 bakers% leavening agent.

6. Method according to claim 5, wherein the leavening agent is yeast.

7. Method according to claim 6, wherein the cut dough pieces are proofed before the cooking.

8. Method according to claim 7, wherein the proofed dough pieces have a specific volume of at least 1.5 ml/g.

9. Method according to any one of the preceding claims, wherein the taste of the second dough is distinguishably different from the taste of the first dough.

10. Method according to any one of the preceding claims, wherein dough rests that remain after the cutting of the dough pieces are combined and mixed, and the rework dough so obtained is introduced into the layered dough by combining the layer of rework dough with the layer of first dough and/or the layer of second dough.

11. Method according to claim 10, wherein coloring is introduced into the rework dough before or during the mixing and wherein the rework dough is reintroduced in the process as the first dough.

12. Method according to any one of the preceding claims, wherein the multilayered dough does not contain fat layers separating the dough layers.

13. A multicolored donut that is obtainable by a method according to any one of the preceding claims.

14. Donut according to claim 13, wherein the layers of cooked dough in the dough laminate each have an average thickness in the range of 1-15 mm.

15. Donut according to claim 13 or 14, wherein the layers of cooked dough in the cooked dough laminate have 2 to 6 different colors.

## Patentansprüche

1. Verfahren zum Herstellen eines mehrfarbigen Donuts, wobei das Verfahren die Schritte umfasst:
• Bereitstellen eines ersten Teigs mit einer ersten Farbe;
• Bereitstellen eines zweiten Teigs mit einer zweiten Farbe, wobei die zweite Farbe erkennbar unterschiedlich von der ersten Farbe ist;
• Kombinieren einer Schicht des ersten Teigs mit einer Schicht des zweiten Teigs, um einen geschichteten Teig herzustellen;
• Falten des geschichteten Teigs wenigstens einmal, um einen mehrschichtigen Teig herzustellen;
• Schneiden von Teigstücken aus dem mehrschichtigen Teig;
• Garen der Teigstücke, wobei das Garen ein Kontaktieren der Teigstücke mit heißem Öl mit einer Temperatur oberhalb von 150°C für wenigstens 3 Sekunden umfasst.

2. Verfahren nach Anspruch 1, wobei das Verfahren ein Schneiden von ringförmigen oder scheibenförmigen Teigstücken aus dem mehrschichtigen Teig umfasst.

3. Verfahren nach Anspruch 1 oder 2, wobei der geschichtete Teig 2- bis 16-mal vor dem Schneiden gefaltet wird.

4. Verfahren nach einem der vorangehenden Ansprüche, wobei der mehrschichtige Teig vor dem Schneiden ausgewalzt wird.

5. Verfahren nach einem der vorangehenden Ansprüche, wobei der erste Teig und der zweite Teig die folgende Zusammensetzung aufweisen:
• 100 Bäcker-% Mehl;
• 20-70 Bäcker-% Wasser;
• 1-20 Bäcker-% Öl;
• 0,5-15 Bäcker-% Zucker;
• 0,5-15 Bäcker-% Backtriebmittel.

6. Verfahren nach Anspruch 5, wobei das Backtriebmittel Hefe ist.

7. Verfahren nach Anspruch 6, wobei die geschnittenen Teigstücke vor dem Garen gehen gelassen werden.

8. Verfahren nach Anspruch 7, wobei die gehen gelassenen Teigstücke ein spezifisches Volumen von wenigstens 1,5 ml/g aufweisen.

9. Verfahren nach einem der vorangehenden Ansprüche, wobei der Geschmack des zweiten Teigs unterscheidbar unterschiedlich von dem Geschmack des ersten Teigs ist.

10. Verfahren nach einem der vorangehenden Ansprüche, wobei Teigreste, die nach dem Schneiden der Teigstücke verbleiben, kombiniert und gemischt werden, und der aufbereitete so erhaltene Teig in den geschichteten Teig durch Kombinieren der Schicht des aufbereiteten Teigs mit der Schicht des ersten Teigs und/oder der Schicht des zweiten Teiges eingeführt wird.

11. Verfahren nach Anspruch 10, wobei Farbstoff in den aufbereiteten Teig vor oder während des Mischens eingeführt wird, und wobei der aufbereitete Teig in das Verfahren als der erste Teig wieder eingeführt wird.

12. Verfahren nach einem der vorangehenden Ansprüche, wobei der mehrschichtige Teig keine Fettschichten enthält, die die Teigschichten trennen.

13. Mehrfarbiger Donut, der erhältlich ist durch ein Verfahren nach einem der vorangehenden Ansprüche.

14. Donut nach Anspruch 13, wobei die Schichten des gegarten Teigs in dem Teiglaminat jeweils eine durchschnittliche Dicke im Bereich von 1-15 mm aufweisen.

15. Donut nach Anspruch 13 oder 14, wobei die Schichten des gegarten Teigs in dem gegarten Teiglaminat 2 bis 6 unterschiedliche Farben aufweisen.

## Revendications

1. Procédé de préparation d'un beignet multicolore, ledit procédé comprenant les étapes consistant à:
• fournir une première pâte ayant une première couleur;
• fournir une seconde pâte ayant une seconde couleur, ladite seconde couleur étant visiblement différente de la première couleur;
• combiner une couche de la première pâte avec une couche de la deuxième pâte pour produire une pâte stratifiée;
• plier au moins une fois la pâte stratifiée pour préparer une pâte multicouche;
• couper des morceaux de pâte de la pâte multicouche;
• cuire des morceaux de pâte, ladite cuisson comprenant la mise en contact des morceaux de pâte avec de l'huile chaude ayant une température supérieure à 150°C pendant au moins 3 secondes.

2. Procédé selon la revendication 1, dans lequel le procédé comprend la découpe de morceaux de pâte en forme d'anneau ou de disque à partir de la pâte multicouche.

3. Procédé selon la revendication 1 ou 2, dans lequel la pâte stratifiée est pliée 2 à 16 fois avant la coupe.

4. Procédé selon l'une quelconque des revendications précédentes, dans lequel la pâte multicouche est mise sous forme de feuille avant la coupe.

5. Procédé selon l'une quelconque des revendications précédentes, dans lequel la première pâte et la deuxième pâte ont la composition suivante:
• 100% poids de la farine;
• 20-70% par rapport au poids de la farine d'eau;
• 1-20% par rapport au poids de la farine d'huile;
• 0,5-15% par rapport au poids de la farine de sucre;
• 0,5-15% par rapport au poids de la farine d'agent de levage.

6. Procédé selon la revendication 5, dans lequel l'agent de levage est de la levure.

7. Procédé selon la revendication 6, dans lequel les morceaux de pâte coupés sont soumis à une montée finale avant la cuisson.

8. Procédé selon la revendication 7, dans lequel les morceaux de pâte après montée finale ont un volume spécifique d'au moins 1,5 ml/g.

9. Procédé selon l'une quelconque des revendications précédentes, dans lequel le goût de la seconde pâte est distinctement différent du goût de la première pâte.

10. Procédé selon l'une quelconque des revendications précédentes, dans lequel les restes de pâte qui restent après la coupe des morceaux de pâte sont combinés et mélangés, et la pâte remaniée ainsi obtenue est introduite dans la pâte stratifiée par combinaison de la couche de pâte de remaniée avec la couche de la première pâte et/ou la couche de la deuxième pâte.

11. Procédé selon la revendication 10, dans lequel une coloration est introduite dans la pâte remaniée avant ou pendant le mélange et dans lequel la pâte remaniée est réintroduite dans le procédé en tant que première pâte.

12. Procédé selon l'une quelconque des revendications précédentes, dans lequel la pâte multicouche ne contient pas de couches de graisse séparant les couches de pâte.

13. Beignet multicolore pouvant être obtenu par un procédé selon l'une quelconque des revendications précédentes.

14. Beignet multicolore selon la revendication 13, dans lequel les couches de pâte cuite dans le stratifié de pâte ont chacune une épaisseur moyenne de l'ordre de 1 à 15 mm.

15. Beignet selon la revendication 13 ou 14, dans lequel les couches de pâte cuite dans le stratifié de la pâte cuite ont 2 à 6 couleurs différentes.
